# EUROPÄISCHE PATENTSCHRIFT

(11) **EP 1 623 391 B1**
(45) Veröffentlichungstag und Bekanntmachung des Hinweises auf die Patenterteilung: **14.11.2012**
(21) Anmeldenummer: 04722549.5
(22) Anmeldetag: 23.03.2004
(51) Int. Cl.: G07C 7/00, G07C 5/12, B41J 2/32

(54) **DRUCKER**
PRINTER
IMPRIMANTE

(30) Priorität: 12.05.2003 DE 10321225
(43) Veröffentlichungstag der Anmeldung: 08.02.2006
(73) Patentinhaber: Continental Automotive GmbH, 30165 Hannover (DE)
(72) Erfinder: HÜGLE, Axel, 78120 Furtwangen (DE); KIRNER, Herbert, 78052 Villingen-Schwenningen (DE); RIESTER, Thomas, 78052 Villingen-Schwenningen (DE)
(86) Internationale Anmeldenummer: PCT/EP2004/003069
(87) Internationale Veröffentlichungsnummer: WO 2004/100078

(56) Entgegenhaltungen:
- EP-A- 1 086 818
- EP-A- 1 103 927
- WO-A-02/063571
- DE-A- 4 005 810
- GB-A- 1 162 331
- GB-A- 1 459 368

## Beschreibung

Die Erfindung betrifft einen Drucker, insbesondere Drucker eines Fahrtenschreibers für ein Kraftfahrzeug, mit einem Gehäuse, einer Druckeinheit, einer Medieneinheit zur Aufnahme des zu bedruckenden Mediums, welche Medieneinheit einen Träger aufweist, und gemeinsam mit dem Träger relativ zu der Druckeinheit in einer Einschubrichtung in eine Betriebsposition und entgegen der Einschubrichtung aus einer Betriebsposition heraus bewegbar ist und zumindest teilweise aus dem Gehäuse heraus bewegbar ist, der Träger in der Art einer Schublade seitliche erste Führungselemente aufweist, welche mit zweiten Führungselementen in der Weise zusammenwirken, dass der Träger in Einschubrichtung und entgegen Einschubrichtung aus dem Gehäuse herausbewegt werden kann.

Eine derartige Vorrichtung ist bereits aus dem Deutschen Gebrauchsmuster 299 20 901.6 bekannt, welches sich mit einem Fahrschreiber von flacher, quaderförmiger Bauart beschäftigt. Der Thermodruckkopf und die Transportwalze für den Transport des als Bandwickel vorliegenden Druckmediums sind durch Herausbewegen des Trägers aus dem Gehäuse der Druckvorrichtung räumlich voneinander trennbar. Dieser Anordnung liegt das Bedürfnis zugrunde, das Druckmedium einfach und mit wenigen Handgriffen auswechseln bzw. nachfüllen zu können, ohne an der empfindlichen und komplizierten Mechanik der Transporteinheit für das Druckmedium und der Druckeinheit hantieren zu müssen.

Die technische Umsetzung dieser erfinderischen Idee hat sich jedoch in der Vergangenheit als problematisch erwiesen. Werden das Transportmodul für das Druckmedium und das Druckmodul beim Öffnen des Gehäuses zum Wechsel des Druckmediums bzw. der Papierrolle voneinander getrennt und anschließend wieder miteinander verbunden, wirkt sich eine auch nur geringfügig veränderte Position der bewegten Transporteinheit negativ auf das Drukkergebnis aus. Auf Grund der allein für die Beweglichkeit der Transporteinheit erforderlichen Lagerspiele ist eine exakte Reproduktion der Position der Transporteinheit relativ zu der Druckeinheit ein dem Erfordernis der Verschieblichkeit der Transporteinheit widerstrebendes Ziel. Die Nachteile des Standes der Technik und die Probleme werden zusätzlich durch die üblichen Bauteiletoleranzen vergrößert, die schon aus wirtschaftlichen Gesichtspunkten invariant sind. Das unbedingt erforderliche Bewegungsspiel für die Transporteinheit führt in Verbindung mit den invarianten Bauteiletoleranzen zu inakzeptablen Ergebnissen in der Druckqualität.

Aus der deutschen Offenlegungsschrift DE 40 05 810 A1 ist bereits eine Thermotransfer-Druckvorrichtung bekannt, bei der Medienwechsel auf Grund des Erfordernisses des Einfädelns des zu bedruckenden Endlosmediums äußert aufwendig für den Benutzer ist. Die europäische Patentanmeldung EP 1 103 927 A2 zeigt einen Fahrtschreiber mit integrierter Druckvorrichtung, wobei die Druckvorrichtung gemeinsam mit einer Aufbewahrungswanne für das Druckmedium schubladenartig aus dem Fahrtschreiber zum Medienwechsel herausgezogen werden kann. Der Medienwechsel ist hier jedoch verhältnismäßig umständlich, da das Druckmedium in die Druckeinheit im Frontteil der Schublade eingefädelt werden muss. Einen einfacheren Medienwechsel ermöglicht die in der internationalen Patentanmeldung WO 02/063571 A1 vorgeschlagene Anordnung einer Druckeinheit zu einer Medieneinheit in dem Gehäuse eines Fahrtschreibers, wobei die Medieneinheit relativ zur Druckeinheit schubladenartig aus dem Gehäuse ausziehbar bewegt werden kann. Diese Anordnung erfordert jedoch zur Erlangung der erforderlichen Druckqualität eine sehr hohe Präzision der schubladenartigen Führung für die Medieneinheit.

Ausgehend von den Problemen und Nachteilen des Standes der Technik hat es sich die Erfindung zur Aufgabe gemacht, einen Drucker zu schaffen, dessen Medieneinheit zur Aufnahme für das zu bedruckende Medium relativ zu der Druckeinheit bewegbar ist und gleichzeitig ein Druckbild von überzeugender Qualität hervorbringt.

Erfindungsgemäß wird die Aufgabe durch einen Drucker bzw. einen in einen Fahrtschreiber integrierten Drucker nach Anspruch 1 bzw. 20 gelöst. Die Unteransprüche zeigen vorteilhafte Weiterbildungen der Erfindung auf.

Die Erfindung behebt das im Stand der Technik vorherrschende Problem des Spiel- und Toleranzausgleiches in der Führung der relativ zu der Druckeinheit bewegbaren Transporteinheit in Abkehr von dem Gedanken, die Position der Transporteinheit nach jeder Bewegungsperiode für eine gute Druckqualität hinreichend exakt in der Gesamtanordnung reproduzieren zu wollen. Statt dessen wird erfindungsgemäß lediglich die Druckeinheit relativ zu dem Träger mit der Medieneinheit hinreichend exakt positioniert, wobei die Kombination dieser beiden Module mit den verhältnismäßig großen Lagetoleranzen in dem Gesamtaufbau des Drucker angeordnet sein kann. Diese Möglichkeit eröffnet sich erfindungsgemäß, weil die Druckeinheit in dem Gesamtaufbau des Druckers bewegbar ist und sich an der Medieneinheit ausrichten kann, wenn diese in das Gehäuse eingeschoben wird. Unter Vermeidung von kostenintensiven niedrigen Toleranzen der Führungsbauteile des Trägers ist es auf diese Weise erstmals möglich, eine gute Druckqualität mit einem komfortablen Druckmedienwechsel an einem gattungsgemäßen Drucker zu vereinen.

Erfindungsgemäβ weist die Medieneinheit einen Träger auf, welcher relativ zu der Druckeinheit in einer Einschubrichtung in eine Betriebsposition und entgegen der Einschubrichtung aus einer Betriebsposition heraus bewegbar ist und zumindest teilsweise aus dem Gehäuse heraus bewegbar ist. Dieser Träger kann der Aufnahme zusätzlicher Bauteile dienen und besteht zweckmäßig aus einem robusten Material, das bei entsprechend steifer statischer Gestaltung ungewollte Verformungen weitgehend vermeidet.

Damit die Druckeinheit zu dem zu bedruckenden Medium stets den für ein gutes Druckbild erforderlich Abstand aufweist, ist es zweckmäßig, wenn die Druckeinheit in dem Gehäuse in Einschubrichtung und entgegen der Einschubrichtung bewegbar ist. Darüber hinaus sind weitere Freiheitsgrade der Beweglichkeit, auch senkrecht zur Einschubrichtung sinnvoll, damit sich die Position des Drucks auf dem Medium mit dem Einschub korrigiert. Zusätzlich ist es zweckmäßig, wenn die Druckeinheit auch Translationsfreiheitsgrade aufweist, so dass eine schräge Stellung der Medieneinheit zu der Druckeinheit mit dem Einschub korrigierbar ist. Insofern ist eine so genannte schwimmende Lagerung der Druckeinheit in dem Gehäuse, welche die vorgenannten Freiheitsgrade miteinander kombiniert, der Druckqualität äußerst zuträglich.

In praktischer Umsetzung werden die verschiedenen Bewegungsfreiheitsgrade erfindungsgemäβ mittels mindestens eines elastischen Elements erzielt, welches die Druckeinheit mit einer Kraft entgegen der Einschubrichtung drückt, so dass die Kraft die Druckeinheit dem Träger entgegen drückt, wenn dieser eingeschoben wird. Zweckmäßig ist das, oder sind die elastischen Elemente so ausgeführt, dass mehrere Bewegungsfreiheitsgrade erzielt werden, bzw. die Druckeinheit schwimmend gelagert ist.

Eine vorteilhafte Weiterbildung der Erfindung sieht vor, dass die Druckeinheit einen ersten Anlagebereich aufweist und das Gehäuse einen zweiten Anlagebereich aufweist und sich die Drukkeinheit mittels der Kraft des elastischen Elements mit dem ersten Anlagebereich in Richtung des zweiten Anlagebereichs bewegt, in einer Ruheposition, welche nicht die Betriebsposition ist, der erste Anlagebereich an den zweiten Anlagebereich anliegt und das Druckmodul mittels der Kraft des elastischen Federelements auf diese Weise zwischen dem elastischen Element und dem zweiten Anlagebereich verspannt ist. Eine erfindungsgemäße Verspannung der Druckeinheit in dem Gehäuse mittels des elastischen Elements und des Zusammenwirkens von Anlagebereichen hat den Vorteil, dass die Druckeinheit stets in einer bestimmten Lage gesichert ist und keine unkontrollierten Bewegungen in dem Gehäuse ausführen kann. Auf diese Weise werden Beschädigungen der Druckeinheit vermieden.

Die Erfindung sieht vor, dass der Träger eine erste Anlagefläche aufweist, die Druckeinheit eine zweite Anlagefläche aufweist und die ersten und zweiten Anlageflächen in der Weise miteinander korrespondieren, dass beim Bewegen des Trägers in Einschubrichtung die ersten Anlageflächen mit den zweiten Anlagefläche jeweils paarweise zur Anlage kommen. Dadurch kommen die erfindungsgemäßen Vorteile besonders zum Tragen, weil eine einmalige, jeweils modulbezogene Justage der Funktionsbauteile zu den jeweiligen Anlageflächen ausreichend ist, um eine zufrieden stellende Betriebsweise des Drucker zu gewährleisten. Daneben können die Anlageflächen vergleichsweise klein gegenüber den Führungsflächen des Trägers ausgebildet sein, was die Kosten einer toleranzgenauen Fertigung der Anlageflächen minimiert.

Damit nicht nur eine gute Lagegenauigkeit der Druckeinheit zu dem Träger in Normalenrichtung von Anlageflächen vorliegt, sondern auch eine hohe Genauigkeit der Relativpositionierung von Druckeinheit zu dem Träger senkrecht zu den Normalen der Anlageflächen vorherrscht, ist es zweckmäßig, wenn die Druckeinheit mindestens ein erstes Zentrierelement aufweist, der Träger mindestens ein zu dem ersten Zentrierelement korrespondierendes zweites Zentrierelement aufweist, so dass der Träger und das Druckmodul in dem Gehäuse beim Bewegen des Trägers in Einschubrichtung mittels der Zentrierelemente in Betriebsposition relativ zueinander in Abstandsrichtung und/oder in mindestens einer Richtung senkrecht zur Abstandsrichtung zentriert werden. Die Zentrierelemente können aus Paarungen von zusammenwirkenden schrägen oder konischen Flächen bestehen oder aus Kegeln, welche mit entsprechenden kegelförmigen Ausnehmungen zusammenwirken. Hier kann es auch vorteilhaft sein, wenn ein Zentrierelement lediglich die Zentrierfunktion in einer Richtung senkrecht zur Normalen der Anlageflächen oder der Bewegungsnormalen übernimmt. Des Weiteren hat sich ein gabelförmiges Zentrierelement als sinnvoll erwiesen, welches mit einem zylindrischen Gegenstück in der Weise zusammenwirkt, dass die Mantelfläche des Zylinders von den einander zugewandten Flanken der gabelförmigen Aufnahme geführt wird.

Eine zweckmäßige systemische Aufspaltung des Druckers in Komponenten, die an dem beweglichen Träger befestigt sind und welche, die an den übrigen Elementen des Druckers befestigt sind, ergibt sich, wenn die an dem Träger befestigte Medieneinheit eine Aufnahme für eine Papierrolle und eine Transporteinheit für Papier der Papierrolle aufweist.

Damit der Träger während des Betriebes in dem Gehäuse stets sicher gehaltert ist, ist es zweckmäßig, wenn die Medieneinheit oder der Träger in dem Gehäuse mittels einer Verriegelungseinheit in einer Betriebsposition verriegelbar ausgebildet ist. Die Verriegelungseinheit hält in einer Verriegelt-Stellung die Medieneinheit in einer Betriebsposition in dem Gehäuse. In einer Entriegelt-Stellung ist die Medieneinheit, bzw. der Träger zumindest zum Teil aus dem Gehäuse heraus bewegbar. Die beweglichen Teile der Verriegelungseinheit sollten hierbei an dem Träger befestigte Bestandteile des Trägers sein. Ein etwaiger Überhub, den der Verriegelungsmechanismus benötigt, um in die Verriegelt-Stellung zu gelangen oder dort einzurasten, wird mittels der erfindungsgemäß beweglichen Verankerung der Druckeinheit in dem Gehäuse vorteilhaft kompensiert.

Stationäre Teile der Verriegelungseinheit, welche mit den beweglichen Teilen an dem Träger verriegelnd zusammenwirken, sind zweckmäßig mit dem Gehäuse fest verbunden. Auf diese Weise ist die Medieneinheit in dem Gehäuse schocksicher fixiert.

In weiterer Ausgestaltung der Erfindung weist die Verriegelungseinheit mindestens zwei Halteelemente auf. Diese vorzugsweise stationären Halteelemente wirken zweckmäßig mit jeweils einem beweglichen korrespondierenden Riegelelement, beispielsweise in Gestalt eines Schieberiegels, eines Hakens, eines beweglichen Stiftes, zusammen. Vorzugsweise sind die Haltelemente symmetrisch an der Medieneinheit und/oder zu einem elastischen Element angeordnet, welches die Druckeinheit mit einer Kraft entgegen der Einschubrichtung drückt.

Zur Erhöhung der Betriebssicherheit ist es zweckmäßig, wenn die beweglichen Teile mit einem Sensor zusammenwirken, welcher eine Verriegelt-Stellung, in welcher die Medieneinheit oder der Träger und die Druckeinheit in Abstandsrichtung zueinander fixiert sind, und/oder eine Entriegelt-Stellung, in welcher die Medieneinheit oder der Träger und die Druckeinheit in Abstandsrichtung nicht zueinander fixiert sind, erfasst. Hierbei ist es sinnvoll, wenn der Sensor mit einer zentralen Steuerung in Verbindung steht, welche mittels des Sensors den Verriegelungszustand abfragt und in Abhängigkeit davon, die Betriebsbereitschaft meldet.

Da es in dem bevorzugten Einsatzraum des erfindungsgemäßen Druckers unter den rauen Betriebsbedingungen und dem schmutzigen Milieu auch schnell zur Verunreinigung der Funktionsbauteile eines Druckers kommen kann, ist es zweckmäßig, wenn der Träger mit dem Gehäuse in einer Betriebsposition gegenüber der Umgebung weitestgehend dicht abschließt.

Für eine hohe Lagertoleranz und im Interesse einer vollautomatischen Serienfertigung ist es sinnvoll, wenn der Drucker mindestens eine Führung aufweist, die mindestens zwei erste Führungselemente aufweist, die an dem Träger angeordnet sind, und zwei zweite Führungselemente aufweist, die mit den ersten Führungselementen an dem Träger korrespondieren, so dass der Träger bei einer Bewegung in oder gegen die Einschubrichtung mittels der Führung geführt ist und die zweiten Führungselemente an einem mittleren Verbindungselement befestigt sind. Dadurch ergibt sich ein genau definierter Abstand zwischen den Führungsschienen, und das Lagerspiel für den Träger ist nicht von weiteren Bauteilen abhängig. Die Einheit von Träger und Druckeinheit kann somit auch außerhalb des fertigen Komplettgerätes getestet werden.

Im Folgenden ist ein bevorzugtes Ausführungsbeispiel der Erfindung zur Verdeutlichung unter Bezugnahme auf Zeichnungen näher beschrieben. Es zeigen:
- Figur 1, 2: schematische Darstellungen verschiedener Phasen der Relativbewegung von der Druckeinheit und dem Träger,
- Figur 3: eine perspektivische Darstellung einer Transporteinheit von schräg unten gesehen,
- Figur 4: eine perspektivische Darstellung einer Druckeinheit von schräg unten gesehen,
- Figur 5: eine perspektivische Darstellung der Zusammenstellung von einer Druckeinheit und einer Transporteinheit von schräg unten gesehen,
- Figur 6: eine perspektivische Darstellung der Zusammenstellung eines Verbindungselementes mit einer Druckeinheit von schräg oben gesehen,
- Figur 7: eine perspektivische Darstellung der Zusammenstellung einer Transporteinheit, einer Druckeinheit, eines Trägers von schräg oben gesehen,
- Figur 8: eine perspektivische Darstellung einer Transporteinheit und des Trägers von schräg oben gesehen,
- Figur 9: eine perspektivische Explosions-Darstellung eines Trägers mit Transporteinheit und Elementen einer Verriegelungseinheit von schräg oben gesehen,
- Figur 10: eine perspektivische Explosions-Darstellung der Zusammenstellung von einer Transporteinheit, einem Druckmodul, einem Träger, seitlichen Führungselementen und einem Verbindungselement von schräg unten gesehen und
- Figur 11: eine perspektivische Zusammenstellung einer Druckeinheit, einer Transporteinheit, eines Trägers, zweier seitlicher Führungselemente und eines Verbindungselementes von schräg unten gesehen.

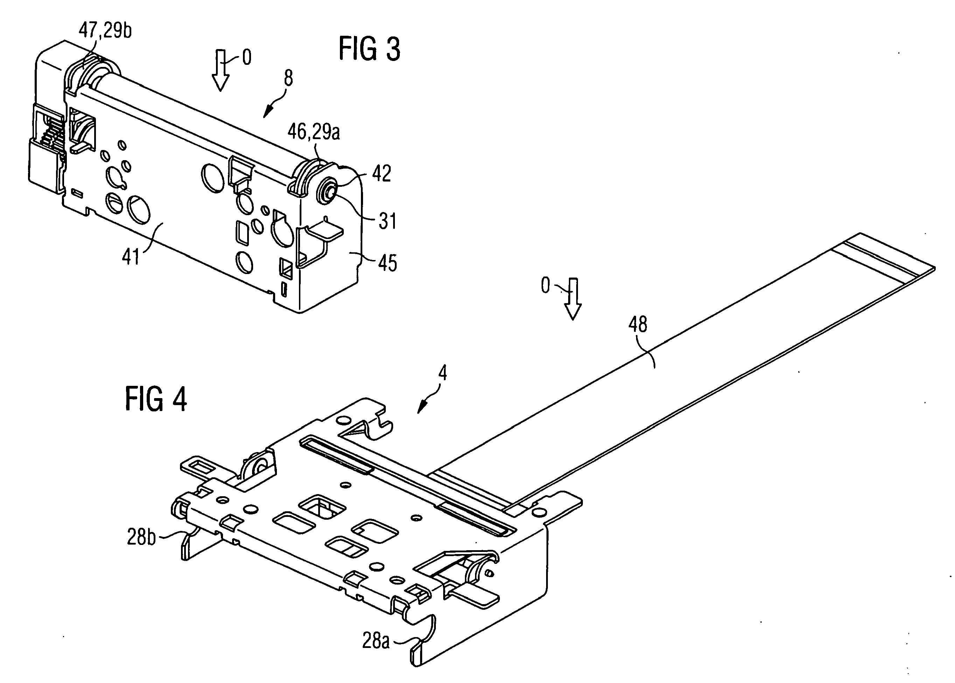

In den Darstellungen eines Druckers 1 der Figuren 3 bis 11 ist jeweils eine als oben bezeichnete Orientierungsrichtung durch einen Pfeil mit dem Bezugszeichen O symbolisiert.

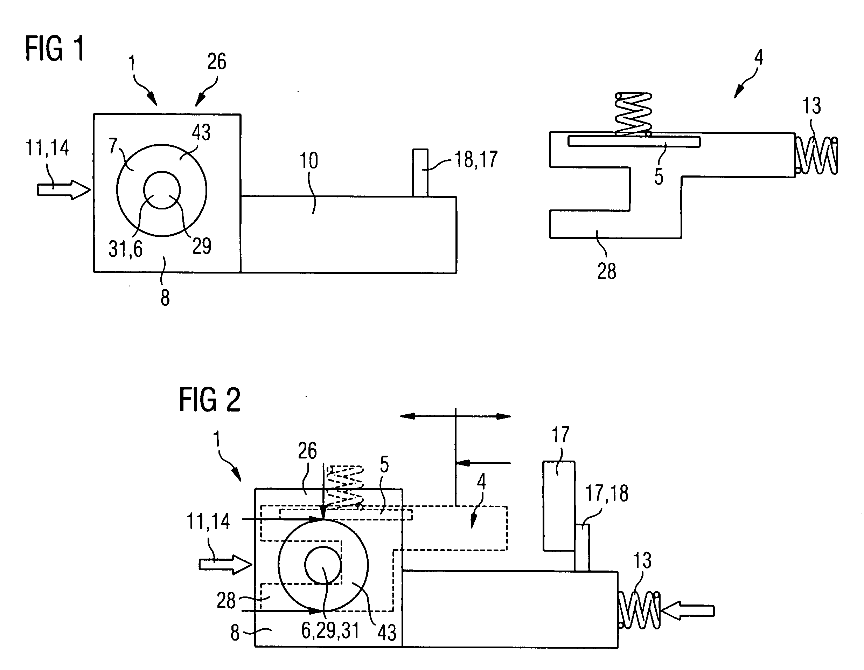

In den schematischen Darstellungen eines Druckers 1 der Figuren 1 und 2 ist die Medieneinheit 26 mit dem Bezugszeichen 26 und die Druckeinheit 4 mit dem Bezugszeichen 4 versehen. Die Medieneinheit 26 umfasst eine Transporteinheit 8 mit einer Transportwalze 43, welche um eine als Welle 31 ausgebildete Aufnahme 6 drehbar gelagert ist. Das nicht dargestellte zu bedruckende Medium, vorzugsweise Papier einer Papierrolle, ist als Bandwickel ausgebildet und ist auf einer nicht dargestellten zylindrischen Aufnahme angeordnet. Die Transporteinheit 8 mit der Transportwalze 43 und der Welle 31 ist an einem Träger 10 befestigt.

Ebenfalls Bestandteil des Trägers 10 sind bewegliche Teile 18 einer Verriegelungseinheit 17.

Der Träger 10 ist bewegbar in und entgegen einer Einschubrichtung 11 in einem nicht dargestellten Gehäuse gelagert. Der Träger 10 kann zum Wechseln des Mediums teilweise aus dem nicht dargestellten Gehäuse herausbewegt werden.

Die Druckeinheit 4 ist in dem nicht dargestellten Gehäuse beweglich in Einschubrichtung 11 gelagert. Die Druckeinheit 4 weist einen Druckkopf 5 auf, der federnd an der Druckeinheit 4 befestigt ist. Ein elastisches Element 13 drückt die Druckeinheit 4 entgegen der Einschubrichtung 11 in Richtung der Transporteinheit 8 und des Trägers 10.

Die Druckeinheit 4 weist ein erstes Zentrierelement 28 auf, dessen Zentrieraufnahme gabelförmig ausgebildet ist. Das erste Zentrierelement 28 der Druckeinheit 4 wirkt mit einem zweiten Zentrierelement 29 an der Transporteinheit 8 des Trägers 10 in der Weise zusammen, dass eine Zentrierung der Transporteinheit 8 relativ zu der Druckeinheit 4 und dem Druckkopf 5 in Abstandsrichtung erfolgt. Wird der Träger 10 in das nicht dargestellte Gehäuse des Druckers 1 eingeschoben, gelangt das zweite Zentrierelement 29, welches zylindrisch gestaltet ist, zwischen die beiden gegenüberliegenden Flanken des gabelförmig ausgebildeten ersten Zentrierelementes 28 an der Druckeinheit 4, wie in Figur 2 dargestellt.

Eine gegen den Träger 10 ausgeübte Kraft 14 pflanzt sich über zweite Anlageflächen an dem ersten Zentrierelement 28 des Trägers 10 bzw. an der Transporteinheit 8 über erste Anlageflächen an dem zweiten Zentrierelement 29 der Druckeinheit 4 bis zu dem elastischen Element 13 fort, welches die Druckeinheit 4 gegen den Träger 10 bzw. die Transporteinheit 8 drückt. Auf diese Weise erfolgt ein Toleranzausgleich der relativen Lage von Druckeinheit 4 und Transporteinheit 8, da die Druckeinheit 4 in Einschubrichtung 11 gegen die Transporteinheit 8 gedrückt wird. Im gleichen Zuge sind die beiden Bauelemente in Abstandsrichtung zueinander aufgrund des Zusammenwirkens des ersten Zentrierelements 28 und zweiten Zentrierelements 29 ausgerichtet.

Nachdem die Zentrierelemente 28, 29 auf Grund der Verspannung mittels des elastischen Elementes 13 zueinander ausgerichtet sind, sorgt eine gemeinsame Bewegung des Trägers 10 bzw. der Transporteinheit 8 und der Druckeinheit 4 für den erforderlichen Überhub zum Einrasten der Verriegelungseinheit 17.

In Figur 3 ist eine Transporteinheit 8 perspektivisch dargestellt. Ein Grundträger 41 weist Aufnahmen 42 für eine Transportwalze 43 der Transporteinheit 8 auf. Die Transportwalze 43 ist mittels der Welle 31 in den Aufnahmen 42 gelagert. Zwischen Seitenwänden 45 des Grundträgers 41 und der Transportwalze 43 sind beidseitig der Transportwalze 43 freie Abschnitte 46, 47 vorgesehen, in welche in Figur 4 dargestellte erste Zentrierelemente 28a, b eingeführt werden können. Auf diese Weise dient die Welle 31 nicht nur der Lagerung der Transportwalze 43, sondern die freien Abschnitte 46, 47 bilden die zweiten Zentrierelemente 29a, b, welche mit den ersten Zentrierelementen 28a, b an der Druckeinheit 4 zusammenwirken.

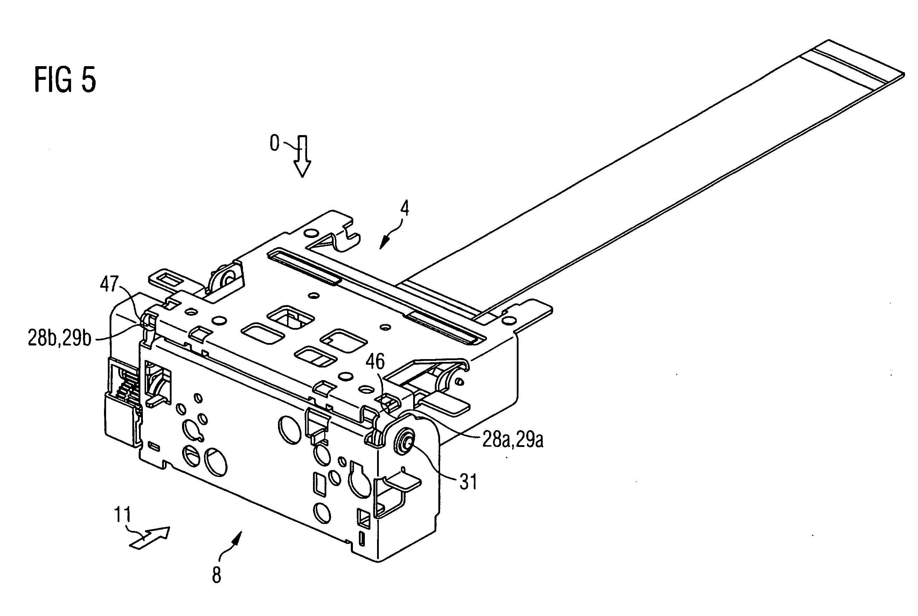

In Figur 4 ist die Druckeinheit 4 aus der Sicht von schräg oben perspektivisch dargestellt. Ein Flachleiterband 48 dient der Ansteuerung der Druckeinheit 4. Wie in Figur 5 gezeigt, wirken die an der Druckeinheit 4 vorgesehenen ersten Zentrierelemente 28a, b mit den an der Transporteinheit 8 vorgesehenen zweiten Zentrierelementen 29a, b in der Weise zusammen, dass aufgrund der gabelförmigen Ausbildung der ersten Zentrierelemente 28a, b an der Druckeinheit 4 eine Zentrierung sowohl in Abstandsrichtung als auch in Einschubrichtung 11 erfolgt und gleichzeitig die Breite der freien Abschnitte 46, 47 auf der Welle 31 eine seitliche Führung bzw. Zentrierung gewährleistet.

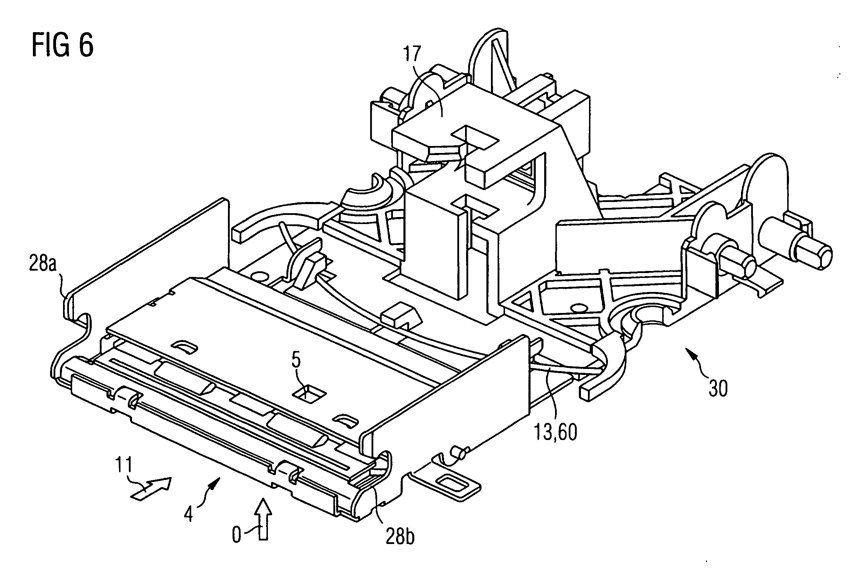

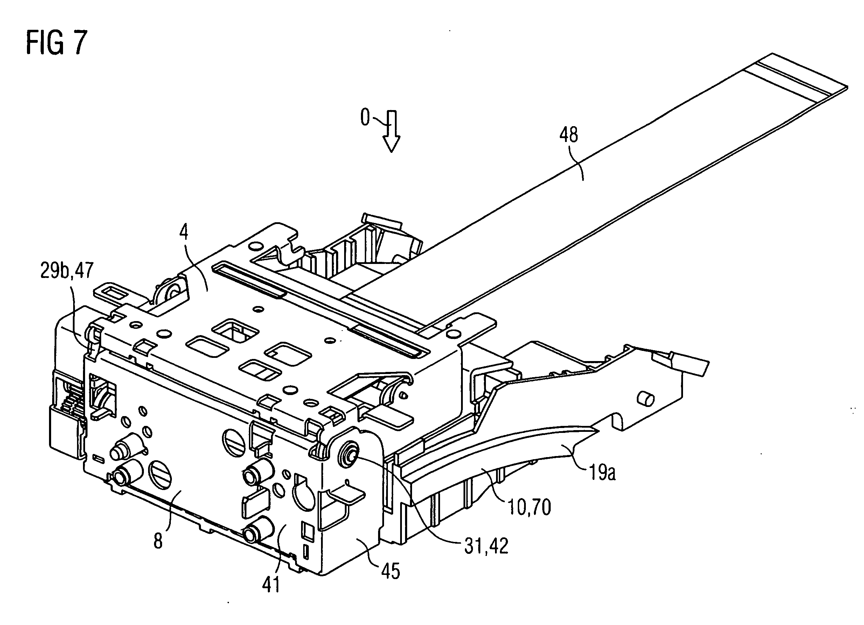

In Figur 6 ist eine perspektivische Darstellung einer Zusammenstellung der Druckeinheit 4 mit einem Verbindungselement 30 gezeigt, welches in Figur 7 dargestellte, seitlich angeordnete erste und zweite Führungselemente 19a, 19b zur seitlichen Führung des Trägers 10 den Träger 10 übergreifend miteinander verbindet. Die in Einschubrichtung 11 beweglich gelagerte Druckeinheit 4 ist mittels eines elastischen Elements 13, nämlich einer Stabfeder 60, an dem Verbindungselement 30 federnd gelagert. Gleiten zweite Zentrierelemente 29a, b in die ersten Zentrierelemente 28a, b und erfolgt eine weitere Bewegung in Einschubrichtung 11 des Trägers 10 bzw. der Transporteinheit 8, wird die Druckeinheit 4 zwischen dem elastischen Element 13 und den zweiten Zentrierelementen 29a, b verspannt. Auf diese Weise wird die Druckeinheit 4 relativ zu der Transporteinheit 8 bzw. dem Träger 10 hinsichtlich aller drei Raumrichtungen ausgerichtet, so dass der Druckkopf 5 einer Druckeinheit 4 stets korrekt zu dem nicht dargestellten Medium ausgerichtet ist.

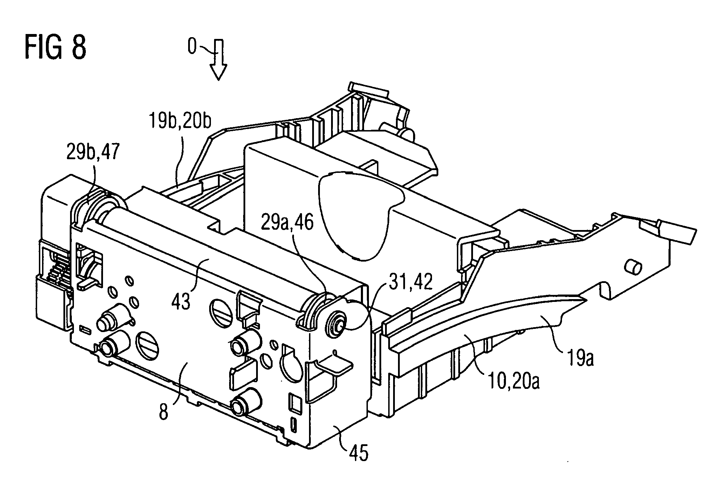

Figur 8 zeigt perspektivisch, wie die Transporteinheit 8 zu dem Träger 10 angeordnet ist. Der Träger 10 weist in der Art einer Schublade seitliche erste Führungselemente 19a, 19b auf, welche mit zweiten Führungselementen 20a, 20b in der Weise zusammenwirken, dass der Träger 10 in Einschubrichtung 11 und entgegen Einschubrichtung 11 aus dem nicht dargestellten Gehäuse herausbewegt werden kann, so das ein Wechseln des Mediums komfortabel durchführbar ist. Die ersten und zweiten Führungselemente 19a, 19b, 20a, 20b sind kreisbogenförmig ausgebildet.

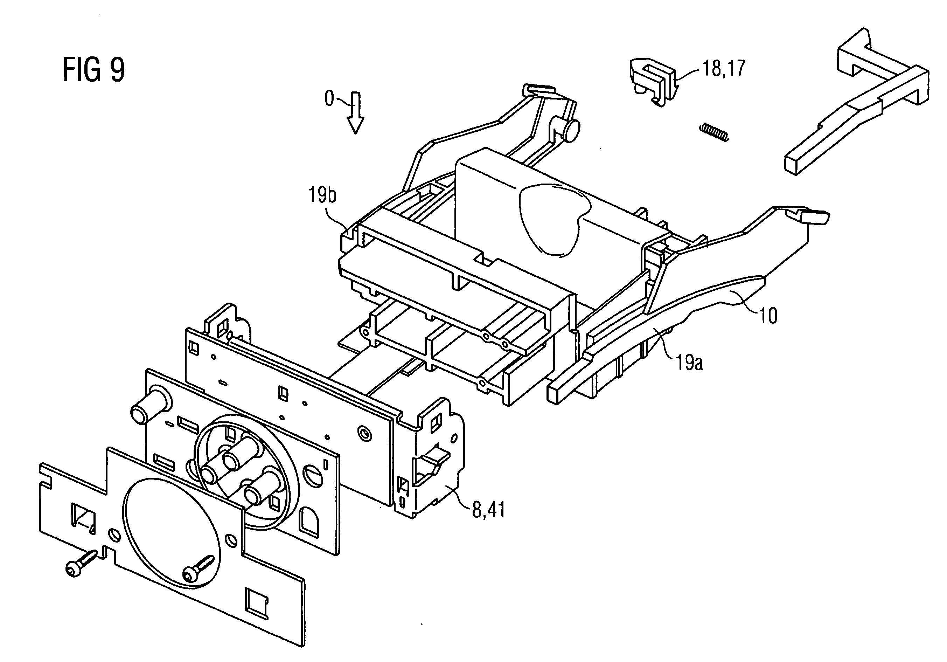

In Figur 9 ist eine perspektivische Explosions-Darstellung des Trägers 10 der Transporteinheit 8 dargestellt. Bewegliche Teile 18 der Verriegelungseinheit 17 sind dem Träger 10 zugeordnet.

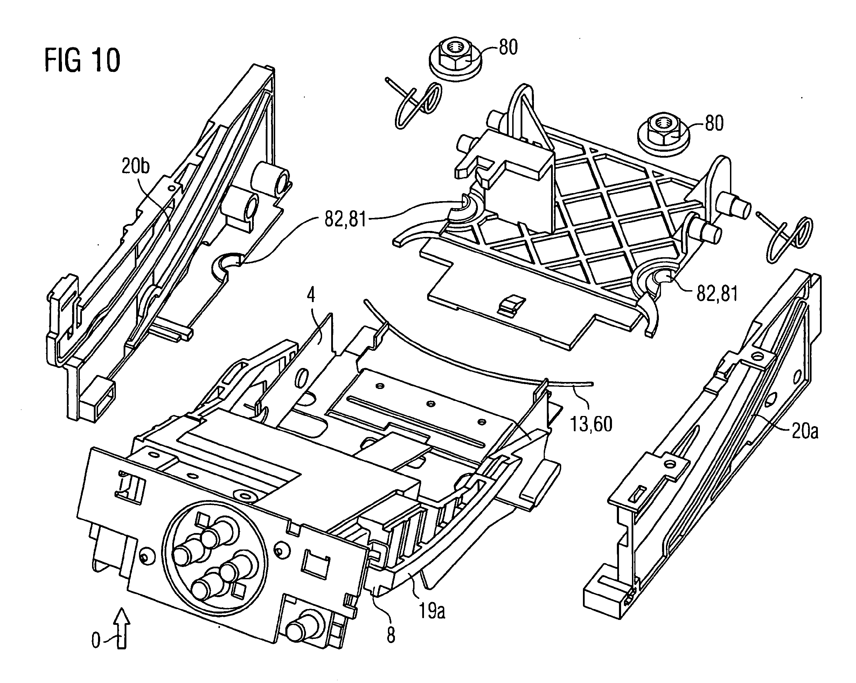

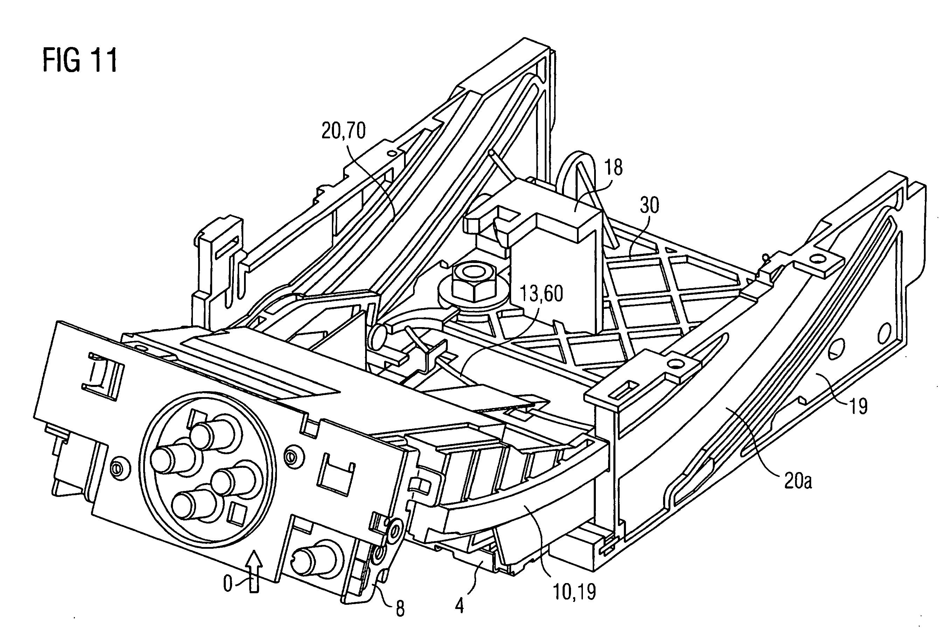

Ein Gesamtzusammenbau aus der Transporteinheit 8, der Druckeinheit 4, dem Träger 10, den seitlichen Führungselementen 19a, 19b, 20a, 20b und dem mittleren Verbindungselement 30 zwischen den seitlichen Führungselementen 19a, 19b, 20a, 20b zeigen die Figur 10 in Explosions-Darstellung und Figur 11 in einfacher Zusammenstellung. Statische Teile der Verriegelungseinheit 17 sind fest an dem Verbindungselement 30 angebracht. Mittels Konusmuttern 80 mit einseitigen konischen Bohrungsenden, welche jeweils konische Krägen 81 von Halbbohrungen 82 zusammenfassen, sind die seitlich angeordneten
Führungselemente 19a, 19b, 20a, 20b an dem Verbindungselement 30 befestigt. Mittels in die Konusmuttern 80 nicht dargestellter eingeschraubter Schrauben wird die Anordnung an einer Gehäusewand befestigt, so dass sich die seitlichen Führungselemente 19a, 19b, 20a, 20b gleichzeitig mit dem Verbindungselement 30 verspannen.

## Patentansprüche

1. Drucker (1), insbesondere Drucker (1) eines Fahrtenschreibers für ein Kraftfahrzeug, mit einem Gehäuse, einer Druckeinheit (4), einer Medieneinheit (26) zur Aufnahme des zu bedruckenden Mediums, welche Medieneinheit (26) relätiv zu der Druckeinheit in einer Einschubrichtung (11) in eine Betriebsposition und entgegen der Einschubrichtung (11) aus einer Betriebsposition heraus bewegbar ist und zumindest teilweise aus dem Gehäuse heraus bewegbar ist, wobei die Druckeinheit (4) in dem Gehäuse innerhalb eines Bewegungsspiels bewegbar ist, wobei Mittel zur Ausrichtung der Druckeinheit (4) zu der Medieneinheit (26) vorgesehen sind, so dass die Druckeinheit (4) und die Medieneinheit (26) zueinander ausgerichtet werden, wenn die Medieneinheit (26) in Einschubrichtung (11) eingeschoben wird, wobei die Medieneznheit (26) einen Träger (10) aufweist, welcher relativ zu der Druckeinheit (4) in einer Einschubrichtung (11) in eine Betriebsposition und entgegen der Einschubrichtung (11) aus einer Betriebsposition heraus bewegbar ist und zumindest teilweise aus dem Gehäuse heraus bewegbar ist, **dadurch gekennzeichnet, dass** der Drucker (1) mindestens ein elastisches Element (13) aufweist, welches die Druckeinheit (4) mit einer Kraft (14) entgegen der Einschubrichtung (11) drückt, so dass die Kraft (14) die Druckeinheit (4) dem Träger (10) entgegen drückt, wenn dieser eingeschoben wird, und wobei der Träger (10) erste Anlageflächen aufweist, die Druckeinheit (4) zweite Anlageflächen aufweist und die ersten und zweiten Anlageflächen in der Weise miteinander korrespondieren, dass beim Bewegen des Trägers (10) in Einschubrichtung (11) die ersten Anlageflächen mit den zweiten Anlageflächen jeweils paarweise zur Anlage kommen.

2. Drucker nach Anspruch 1, **dadurch gekennzeichnet, dass** die Druckeinheit (4) in dem Gehäuse in Einschubrichtung (11) und entgegen der Einschubrichtung (11) im Ausmaß eines im Wesentlichen horizontalen Bewegungsspiels bewegbar ist.

3. Drucker nach Anspruch 1, **dadurch gekennzeichnet, dass** die Druckeinheit (4) quer zur Einschubrichtung (11) in dem Gehäuse im Ausmaß eines im Wesentlichen horizontalen Bewegungsspiels bewegbar ist.

4. Drucker nach Anspruch 1, **dadurch gekennzeichnet, dass** die Druckeinheit (4) quer zur Einschubrichtung (11) in dem Gehäuse im Ausmaß eines im Wesentlichen vertikalen Bewegungsspiels bewegbar ist.

5. Drucker nach Anspruch 1, **dadurch gekennzeichnet, dass** das horizontale Bewegungsspiel quer zur Einschubrichtung (11) insgesamt zwischen 0,5 mm und 1,5 mm beträgt.

6. Drucker nach Anspruch 1, **dadurch gekennzeichnet, dass** das horizontale Bewegungsspiel in Einschubrichtung (11) insgesamt zwischen 0,5 mm und 1,5 mm beträgt.

7. Drucker nach Anspruch 1, **dadurch gekennzeichnet, dass** das vertikale Bewegungsspiel quer zur Einschubrichtung (11) insgesamt zwischen 0,2 mm und 0,5 mm beträgt.

8. Drucker nach Anspruch 1, **dadurch gekennzeichnet, dass** die Druckeinheit (4) in dem Gehäuse schwimmend gelagert ist.

9. Drucker nach Anspruch 1, **dadurch gekennzeichnet, dass** das elastische Element (13) so ausgebildet ist, dass es die Druckeinheit (4) in dem Gehäuse bei nicht in Betriebsposition befindlicher Medieneinheit gegen das Bewegungsspiel begrenzende Anschläge vorspannt.

10. Drucker nach Anspruch 1, **dadurch gekennzeichnet, dass** die Druckeinheit (4) einen ersten Anlagebereich aufweist und das Gehäuse einen zweiten Anlagebereich aufweist und sich die Druckeinheit (4) mittels der Kraft (14) des elastischen Elements (13) mit dem ersten Anlagebereich in Richtung des zweiten Anlagebereichs bewegt, in einer Ruheposition, welche nicht die Betriebsposition ist, der erste Anlagebereich an dem zweiten Anlagebereich anliegt und die Druckeinheit (4) mittels der Kraft (14) aus dem elastischen Element (13) auf diese Weise zwischen dem elastischen Element (13) und dem zweiten Anlagebereich verspannt ist.

11. Drucker nach Anspruch 1, **dadurch gekennzeichnet, dass** die Druckeinheit (4) mindestens ein erstes Zentrierelement (28) aufweist, der Träger (10) mindestens ein zu dem ersten Zentrierelement (28) korrespondierendes zweites Zentrierelement (29) aufweist, so dass der Träger (10) und die Druckeinheit (4) in dem Gehäuse beim Bewegen des Trägers (10) in Einschubrichtung mittels der Zentrierelemente (28, 29) in Betriebsposition relativ zueinander in Abstandsrichtung ausgerichtet werden und/oder in mindestens einer Richtung senkrecht zur Abstandsrichtung zentriert werden.

12. Drucker nach Anspruch 1, **dadurch gekennzeichnet, dass** die Medieneinheit (26) eine Aufnahme für das Druckmedium, insbesondere für eine Papierrolle und eine Transporteinheit (8) für das Druckmedium, insbesondere das Papier der Papierrolle aufweist.

13. Drucker nach Anspruch 1, **dadurch gekennzeichnet, dass** die Medieneinheit (26) in dem Gehäuse mittels einer Verriegelungseinheit (17) in einer Betriebsposition verriegelbar ist.

14. Drucker nach Anspruch 13, **dadurch gekennzeichnet, dass** die Verriegelungseinheit (17) bewegliche Teile (18) aufweist, die an der Medieneinheit (26) befestigte Bestandteile der Medieneinheit (26) sind.

15. Drucker nach Anspruch 13, **dadurch gekennzeichnet, dass** die Verriegelungseinheit (17) stationäre Teile aufweist, welche mit dem Gehäuse fest verbunden sind und mit den beweglichen Teilen (18) an dem Träger (10) verriegelnd zusammenwirken.

16. Drucker nach Anspruch 13, **dadurch gekennzeichnet, dass** die Verriegelungseinheit (17) mindestens zwei Halteelemente aufweist, welche symmetrisch zu dem elastischen Element (13) angeordnet sind.

17. Drucker nach Anspruch 13, **dadurch gekennzeichnet, dass** die beweglichen Teile mit einem Sensor zusammenwirken, welcher eine Verriegelt-Stellung, in welcher die Medieneinheit (26) oder der Träger (10) und die Druckeinheit (4) in Abstandsrichtung zueinander fixiert sind, und/oder eine Entriegelt-Stellung, in welcher die Medieneinheit (26) oder der Träger (10) und die Druckeinheit (4) in Abstandsrichtung nicht zueinander fixiert sind, erfasst.

18. Drucker nach Anspruch 1, **dadurch gekennzeichnet, dass** der Träger (10) mit dem Gehäuse in einer Betriebsposition gegenüber der Umgebung weitestgehend dicht abschließt.

19. Drucker nach Anspruch 1, **dadurch gekennzeichnet, dass** der Drucker mindestens eine Führung aufweist, die mindestens zwei erste Führungselemente (19a, 19b) aufweist, die an dem Träger (10) angeordnet sind, und zwei zweite Führungselemente (20a, 20b) aufweist, die mit den ersten Führungselementen (19) an dem Träger (10) korrespondieren, so dass der Träger (10) bei einer Bewegung in oder gegen die Einschubrichtung (11) mittels der Führung geführt ist und die zweiten Führungselemente (20a, 20b) an einem mittleren Verbindungselement (30) befestigt sind.

20. Fahrtenschreiber mit einem Drucker (1) nach mindestens einem der vorhergehenden Ansprüche

## Claims

1. Printer (1), in particular a printer of a tachograph for a motor vehicle, having a housing, a printing unit (4), a media unit (26) for accommodating the medium which is to be printed, which media unit (26) can be moved, relative to the printing unit, in a push-in direction (11) into an operating position and counter to the push-in direction (11) out of an operating position, and can be moved at least partly out of the housing, it being possible for the printing unit (4) to move in the housing within a movement play, means for orienting the printing unit (4) with respect to the media unit (26) being provided, with the result that the printing unit (4) and the media unit (26) are oriented with respect to one another when the media unit (26) is pushed in in the push-in direction (11), the media unit (26) having a carrier (10) which can be moved, relative to the printing unit 4, in a push-in direction (11) into an operating position and counter to the push-in direction (11) out of an operating position, and can be moved at least partly out of the housing, **characterized in that** the printer (1) has at least one elastic element (13) which presses the printing unit (4) counter to the push-in direction (11) with a force (14), with the result that the force (14) presses the printing unit (4) counter to the carrier (10) when the latter is pushed in, and, the carrier (10) having first contact faces, the printing unit (4) having second contact faces, and the first and second contact faces corresponding with one another in such a way that, when the carrier (10) is moved in the push-in direction (11), the first contact faces come into contact with the second contact faces, in each case in pairs.

2. Printer according to Claim 1, **characterized in that** the printing unit (4) can be moved in the housing, in the push-in direction (11) and counter to the push-in direction (11), to the extent of a substantially horizontal movement play.

3. Printer according to Claim 1, **characterized in that** the printing unit (4) can be moved in the housing, transversely with respect to the push-in direction (11), to the extent of a substantially horizontal movement play.

4. Printer according to Claim 1, **characterized in that** the printing unit (4) can be moved in the housing, transversely with respect to the push-in direction (11), to the extent of a substantially vertical movement play.

5. Printer according to Claim 1, **characterized in that** the horizontal movement play transversely with respect to the push-in direction (11) is between 0.5 mm and 1.5 mm overall.

6. Printer according to Claim 1, **characterized in that** the horizontal movement play in the push-in direction (11) is between 0.5 mm and 1.5 mm overall.

7. Printer according to Claim 1, **characterized in that** the vertical movement play transversely with respect to the push-in direction (11) is between 0.5 mm and 1.5 mm overall.

8. Printer according to Claim 1, **characterized in that** the printing unit (4) is mounted in the housing in a floating manner.

9. Printer according to Claim 1, **characterized in that** the elastic element (13) is configured in such a way that, when the media unit is not in the operating position, said elastic element (13) presses the printing unit (4) in the housing against stops which limit the movement play.

10. Printer according to Claim 1, **characterized in that** the printing unit (4) has a first contact region and the housing has a second contact region and, by means of the force (14) of the elastic element (13), the printing unit (4) moves with the first contact region in the direction of the second contact region, in a rest position which is not the operating position, the first contact region bears against the second contact region and the printing unit (4) is clamped in this way between the elastic element (13) and the second contact region by means of the force (14) from the elastic element (13).

11. Printer according to Claim 1, **characterized in that** the printing unit (4) has at least one first centering element (28) and the carrier (10) has at least one second centering element (29) which corresponds to the first centering element (28), with the result that, when the carrier (10) is moved in the push-in direction, the carrier (10) and the printing unit (4) are oriented in the housing by means of the centering elements (28, 29) in the operating position, relative to one another in the spacing direction, and/or are centered in at least one direction perpendicular with respect to the spacing direction.

12. Printer according to Claim 1, **characterized in that** the media unit (26) has a receptacle for the printing medium, in particular for a paper roll, and a transport unit (8) for the printing medium, in particular the paper of the paper roll.

13. Printer according to Claim 1, **characterized in that** the media unit (26) can be locked in an operating position in the housing by means of a locking unit (17).

14. Printer according to Claim 13, **characterized in that** the locking unit (17) has movable parts (18) which are constituent parts of the media unit (26) which are fastened to the media unit (26).

15. Printer according to Claim 13, **characterized in that** the locking unit (17) has stationary parts which are connected fixedly to the housing and interact in a locking manner with the movable parts (18) on the carrier (10).

16. Printer according to Claim 13, **characterized in that** the locking unit (17) has at least two holding elements which are arranged symmetrically with respect to the elastic element (13).

17. Printer according to Claim 13, **characterized in that** the movable parts interact with a sensor which senses a locked position, in which the media unit (26) or the carrier (10) and the printing unit (4) are fixed in the spacing direction with respect to one another, and/or an unlocked position, in which the media unit (26) or the carrier (10) and the printing unit (4) are not fixed in the spacing direction with respect to one another.

18. Printer according to Claim 1, **characterized in that**, in an operating position, the carrier (10) is sealed off with the housing as tightly as possible with respect to the surroundings.

19. Printer according to Claim 1, **characterized in that** the printer has at least one guide which has at least two first guide elements (19a, 19b) which are arranged on the carrier (10), and has two second guide elements (20a, 20b) which correspond with the first guide elements (19) on the carrier (10), with the result that the carrier (10) is guided by means of the guide in the event of a movement in or counter to the push-in direction (11), and the second guide elements (20a, 20b) are fastened to a central connecting element (30).

20. Tachograph having the printer (1) according to at least one of the preceding Claims.

## Revendications

1. Imprimante (1), notamment imprimante (1) pour un contrôlographe d'un véhicule automobile, comprenant un boîtier, une unité (4) d'impression, une unité (26) de support pour la réception du support à imprimer, unité (26) de support qui est mobile par rapport à l'unité d'impression pour venir dans une position de fonctionnement suivant un sens (11) d'insertion et sortir de la position de fonctionnement dans le sens contraire au sens (11) d'insertion et qui est mobile au moins en partie pour sortir du boîtier, dans laquelle l'unité (4) d'impression est mobile dans le boîtier à l'intérieur d'un jeu de déplacement, dans laquelle il est prévu des moyens d'orientation de l'unité (4) d'impression par rapport à l'unité (26) de support, de sorte que l'unité (4) d'impression et l'unité (26) de support soient orientées l'une par rapport à l'autre lorsque l'unité (26) de support est insérée dans le sens (11) d'insertion, l'unité (26) de support ayant un support (10) qui est mobile par rapport à l'unité (4) d'impression pour venir dans une position de fonctionnement suivant un sens (11) d'insertion et pour sortir d'une position de fonctionnement dans le sens contraire au sens (11) d'insertion et étant mobile au moins en partie pour sortir du boîtier, **caractérisée en ce que** l'imprimante (1) a au moins un élément (13) élastique, qui pousse l'unité (4) d'impression par une force (14) dans le sens contraire au sens (11) d'insertion, de sorte que la force (14) pousse l'unité (4) d'impression contrairement au support (10), lorsque celui-ci est inséré, et dans laquelle le support (10) a des premières surfaces d'application, l'unité (4) d'impression a des deuxièmes surfaces d'application et les première et deuxième surfaces d'application se correspondent, de manière à ce que, lorsque le support (10) se déplace dans le sens (11) d'insertion, les premières surfaces d'application viennent respectivement paire par paire en application avec les deuxièmes surfaces d'application.

2. Imprimante suivant la revendication 1, **caractérisée en ce que** l'unité (4) d'impression est mobile dans la mesure d'un jeu de déplacement sensiblement horizontal dans le boîtier dans le sens (11) d'insertion et dans le sens contraire.

3. Imprimante suivant la revendication 1, **caractérisée en ce que** l'unité (4) d'impression est mobile dans la mesure d'un jeu de déplacement sensiblement horizontal dans le boîtier transversalement au sens (11) d'insertion.

4. Imprimante suivant la revendication 1, **caractérisée en ce que** l'unité (4) d'impression est mobile dans la mesure d'un jeu de déplacement sensiblement vertical dans le boîtier transversalement au sens (11) d'insertion.

5. Imprimante suivant la revendication 1, **caractérisée en ce que** le jeu de déplacement horizontal transversalement au sens (11) d'insertion est en tout compris entre 0,5 mm et 1,5 mm.

6. Imprimante suivant la revendication 1, **caractérisée en ce que** le jeu de déplacement horizontal dans le sens (11) d'insertion est en tout compris entre 0,5 mm et 1,5 mm.

7. Imprimante suivant la revendication 1, **caractérisée en ce que** le jeu de déplacement vertical transversalement au sens (11) d'insertion est en tout compris entre 0,2 mm et 0,5 mm.

8. Imprimante suivant la revendication 1, **caractérisée en ce que** l'unité (4) d'impression est montée flottante dans le boîtier.

9. Imprimante suivant la revendication 1, **caractérisée en ce que** l'élément (13) élastique est tel qu'il précontraint, sur des butées limitant le jeu de déplacement, l'unité (4) d'impression dans le boîtier lorsque l'unité de support ne se trouve pas en position de fonctionnement.

10. Imprimante suivant la revendication 1, **caractérisée en ce que** l'unité (4) d'impression a une première zone d'application et le boîtier a une deuxième zone d'application et l'unité (4) d'impression se déplace au moyen de la force (14) de l'élément (13) élastique avec la première zone d'application dans la direction de la deuxième zone d'application, en une position de repos qui n'est pas la position de fonctionnement, la première zone d'application s'applique à la deuxième zone d'application et l'unité (4) d'impression est précontrainte au moyen de la force (14) provenant de l'élément (13) élastique de cette façon entre l'élément (13) élastique et la deuxième zone d'application.

11. Imprimante suivant la revendication 1, **caractérisée en ce que** l'unité (4) d'impression a au moins un premier élément (18) de centrage, le support (10) a au moins un deuxième élément (29) de centrage correspondant au premier élément (28) de centrage, de manière à ce que le support (10) et l'unité (4) d'impression soient dans le boîtier, lors du déplacement du support (10) dans le sens d'insertion, orientés au moyen des éléments (28, 29) de centrage dans la position de fonctionnement l'un par rapport à l'autre dans la direction qui les séparent et/ou soient centrés dans au moins une direction perpendiculaire à la direction qui les séparent.

12. Imprimante suivant la revendication 1, **caractérisée en ce que** l'unité (26) de support a un logement pour le support d'impression, notamment pour un rouleau de papier et une unité (8) de transport pour le support d'enregistrement, notamment le papier du rouleau de papier.

13. Imprimante suivant la revendication 1, **caractérisée en ce que** l'unité (26) de support peut être verrouillée dans le boîtier en une position de fonctionnement au moyen d'une unité (17) de verrouillage.

14. Imprimante suivant la revendication 13, **caractérisée en ce que** l'unité (17) de verrouillage a des pièces (18) mobiles, qui sont des constituants de l'unité (26) de support, fixées à l'unité (26) de support.

15. Imprimante suivant la revendication 13, **caractérisée en ce que** l'unité (17) de verrouillage a des parties fixes, qui sont reliées fixement au boîtier et qui coopèrent à verrouillage avec les pièces (18) mobiles du support (10).

16. Imprimante suivant la revendication 13, **caractérisée en ce que** l'unité (17) de verrouillage a au moins deux éléments de maintien, qui sont disposés symétriquement par rapport à l'élément (13) élastique.

17. Imprimante suivant la revendication 13, **caractérisée en ce que** les pièces mobiles coopèrent avec un capteur, qui détecte une position verrouillée, dans laquelle l'unité (26) de support ou le support (10) et l'unité (4) d'impression sont immobilisés l'un par rapport à l'autre dans la direction qui les séparent, et/ou une position déverrouillée, dans laquelle l'unité (26) de support ou le support (10) et l'unité (4) d'impression ne sont pas immobilisés l'un par rapport à l'autre dans une direction qui les séparent.

18. Imprimante suivant la revendication 1, **caractérisée en ce que** le support (10) ferme dans une grande mesure d'une manière étanche par rapport à l'extérieur avec le boîtier dans une position de fonctionnement.

19. Imprimante suivant la revendication 1, **caractérisée en ce que** l'imprimante a au moins une glissière qui a au moins deux premiers éléments (19a, 19b) de guidage, qui sont montés sur le support (10) et a deux deuxièmes éléments (20a, 20b) de guidage qui correspondent aux premiers éléments (19) de guidage du support (10), de sorte que le support, lors d'un déplacement dans le sens (11) d'insertion ou dans le sens contraire, est guidé au moyen de la glissière et les deuxièmes éléments (20a, 20b) de guidage sont fixés sur un élément (30) médian de liaison.

20. Contrôlographe comprenant une imprimante (1) suivant au moins l'une des revendications précédentes.
